# EUROPÄISCHE PATENTSCHRIFT

(11) **EP 1 842 028 B1**
(45) Veröffentlichungstag und Bekanntmachung des Hinweises auf die Patenterteilung: **03.10.2012**
(21) Anmeldenummer: 06707767.7
(22) Anmeldetag: 19.01.2006
(51) Int. Cl.: G01C 15/00

(54) **MODULAR ERWEITERBARE GEODÄTISCHE TOTALSTATION**
GEODETIC TOTAL STATION THAT CAN BE EXTENDED IN A MODULAR MANNER
STATION TOTALE GEODESIQUE A ELARGISSEMENT MODULAIRE

(30) Priorität: 26.01.2005 EP 05001531
(43) Veröffentlichungstag der Anmeldung: 10.10.2007
(73) Patentinhaber: Leica Geosystems AG, 9435 Heerbrugg (CH)
(72) Erfinder: SCHWARZ, Johannes, CH-9443 Widnau (CH)
(74) Vertreter: Kaminski Harmann
(86) Internationale Anmeldenummer: PCT/EP2006/050318
(87) Internationale Veröffentlichungsnummer: WO 2006/079604

(56) Entgegenhaltungen:
- EP-A- 0 481 307
- WO-A-90/00719
- DE-A1- 19 635 591
- US-A- 5 760 748
- PATENT ABSTRACTS OF JAPAN Bd. 2000, Nr. 19, 5. Juni 2001 (2001-06-05) & JP 2001 033251 A (SGS:KK), 9. Februar 2001 (2001-02-09)

## Beschreibung

Die Erfindung betrifft eine geodätische Totalstation zur optischen Messung von Horizontalwinkeln, Vertikalwinkeln und Distanzen nach dem Oberbegriff des Anspruchs 1.

Eine geodätische Totalstation gemäss dem Oberbegriff ist aus der EP 0 423 162 B1 (Leica Heerbrugg AG), welche als nächstliegender Stand der Technik betrachtet wird, bekannt.

Totalstationen zum elektrosensorischen Messen von Winkeln und Strecken sind seit längerem aus dem Stand der Technik bekannt und werden auch als elektronische Tachymeter oder Computer-Tachymeter bezeichnet. Moderne Totalstationen verfügen über leistungsfähige Mikroprozessoren zur digitalen Weiterverarbeitung und Speicherung erfasster Messdaten. Die Geräte sind in der Regel in kompakter und integrierter Bauweise hergestellt, wobei meist koaxiale Distanz- und Winkelmesselemente sowie Rechen-, Steuer- und Speichereinheiten in einem Gerät integriert sind. Abhängig von der Ausbaustufe der Totalstation sind Mittel zur Motorisierung der Zieloptik, zur reflektorlosen Streckenmessung, zur automatischen Zielsuche und -verfolgung und zur Fernsteuerung des gesamten Geräts integriert. Aus dem Stand der Technik bekannte Totalstationen verfügen weiters über eine Datenschnittstelle zum Anschluss externer Peripheriekomponenten, beispielsweise einer Funkempfangs - und/oder Sendeeinheit, einer GPS-Antenne, einem Personal Computer, insbesondere einem Notebook, oder einem Kleincomputer, insbesondere PDA. Die Datenschnittstelle ist in der Regel als serielle Schnittstelle nach dem Standard RS-232 ausgeführt und steht in Datenverbindung zur Mikroprozessoreinheit der Totalstation. Mittels der Datenschnittstelle ist es möglich, von der Totalstation erfasste und gespeicherte Messdaten zur externen Weiterverarbeitung auszugeben, extern erfasste Messdaten zur Speicherung und/oder Weiterverarbeitung in die Totalstation einzulesen, Fernsteuersignale zur Fernsteuerung der Totalstation oder einer externen Komponente insbesondere im mobilen Feldeinsatz ein- bzw. auszugeben und Steuerungs-Software in die Totalstation zu überspielen.

Der Datenschnittstelle kommt bei Erweiterung der Totalstation mit Zusatzperipherie für besondere Messaufgaben im Feldeinsatz eine besondere Bedeutung zu. Da die Kundenerwartungen an eine Totalstation und die Einsatzgebiete stark variieren, ist die Integration von Komponenten, die nur vereinzelt von Kunden benötigt werden oder landesspezifischen - insbesondere gesetzlichen - Einschränkungen, beispielsweise Funkzulassungen, unterliegen, oft nicht sinnvoll, weshalb in diesen Fällen auf externe Zusatzperipherie, die über die Datenschnittstelle an die Totalstation angeschlossen wird, zurückgegriffen wird. Ein Beispiel hierfür bilden Funkempfangs- und/oder -Sendeeinheiten, die aufgrund nationaler Funkstandards und gesetzlicher Telekommunikations - oder Rundfunkvorschriften als externe, an die Totalstation anschliessbare Peripheriekomponenten ausgebildet sind. Somit kann eine aufwendige Umrüstung der Totalstation bei Export des Geräts entfallen, da lediglich die externe Funkeinheit ausgetauscht werden muss. Jedoch widerspricht die externe Anordnung einer Funkeinheit dem Prinzip der Totalstation, nämlich der Integrierung sämtlicher Elemente in einem einzigen Gerät.

Ausserdem ist es möglich, wie beispielsweise in der US 5,821,900 oder der EP 0 892 245 A3 beschrieben, eine externe Satellitenpositionsbestimmungseinheit mit einer Satellitensignalempfangsantenne, insbesondere zum Empfang von GPS-, GLONASS- oder GALILEO-Signalen, über die externe Datenschnitt an die Totalstation anzuschliessen und somit der Mikroprozessoreinheit Satellitenpositionssignale, mittels welchen die absolute Position der Totalstation ermittelt werden kann, zuzuführen. Da die Positionsbestimmungsgenauigkeit durch den alleinigen Empfang von Satellitensignalen zwischen 5 bis 10 Metern liegt, wird in der Regel zusätzlich eine Funkempfangseinheit zum Empfang von Korrekturdaten, insbesondere nach dem RTK- oder DGPS-Standard, an die Datenschnittstelle oder die Satellitenpositionsbestimmungseinheit angeschlossen, wodurch die Positionsbestimmungsgenauigkeit auf bis unter 5 Millimeter erhöht werden kann.

Die bekannten, universell einsetzbaren und für den Feldeinsatz tauglichen Datenschnittstellen sind seitlich an der Stütze oder Alhidade der Totalstation, direkt an der Anzeigeeinheit oder am Unterteil der Totalstation angeordnet. Ein besonderes Problem ist der Schutz der unbelegten Datenschnittstelle vor Verunreinigungen oder Feuchtigkeit. Zum Verschluss der Datenschnittstelle dienen Abdeckkappen oder Pfropfen. Jedoch besteht die Gefahr, dass nach Entfernen der externen Peripheriekomponente das Verschliessen der Datenschnittstelle vergessen wird. Selbstschliessende Abdeckungen für die Datenschnittstelle sind relativ unkomfortabel in der Handhabung und werden leicht beschädigt.

Ferner ist aus dem Stand der Technik bekannt, Theodolite oder Totalstationen mit einem abnehmbaren Bügelgriff oberhalb der Alhidade auf der Oberseite der beiden Stützen, zwischen denen das Fernrohr angeordnet ist, auszustatten. In der JP 04212012 A wird eine Totalstation mit einem abnehmbaren Bügelgriff beschrieben, in welchem eine Batterie zur Stromversorgung der Totalstation integriert ist. In der EP 0 481 307 A2 (Asahi Seimitsu Kabushiki Kaisha) wird eine Messvorrichtung in Form einer Totalstation mit einer abnehmbarer Batterie ebenfalls in Form eines abnehmbaren Bügelgriffs, der oberhalb der Alhidade auf der Oberseite der beiden Stützen montiert ist, gezeigt. Auf dem Bügelgriff ist ein GPS-Empfänger mittels einer lösbaren mechanischen Schnittstelle derart fixierbar, dass das Antennenzentrum der GPS-Antenne von der Stehachse durchlaufen wird.

Die EP 0 423 162 B1 (Leica Heerbrugg AG), welche als nächstliegender Stand der Technik betrachtet wird, beschreibt ein terrestrisches Vermessungssystem mit einer Totalstation und einer Satelliten-Positions-Messeinheit mit einem Empfänger, der mit der Totalstation über eine Zwangszentrierung entkoppelbar und bezüglich seiner geometrischen Relativposition eindeutig verbunde werden kann, wobei die Totalstation und die Satelliten-Positions-Messeinheit durch eine drahtlose Datenübermittlungseinrichtung miteinander verbunden sind. Da die Datenübermittlung drahtlos erfolgt, kann eine drahtgebundenen Datenschnittstelle entfallen. Jedoch erfordert die offenbarte Vorrichtung eine zusätzliche drahtlose Datenübermittlungseinrichtung, die den nationalen gesetzlichen Rundfunkvorschriften unterworfen ist und den Aufoau der gesamten Vorrichtung verkompliziert.

Die US 6,014,109 offenbart eine Totalstation mit mindestens einer relativ zur Stehachse exzentrisch oberhalb der Stütze des Oberteils der Totalstation fest angeordneten Satellitensignalantenne.

Aus der DE 196 35 591 A1 (Nikon Corp.) ist eine Totalstation bekannt, an welcher seitlich an einer Stütze der Alhidade eine GPS-Empfangseinheit unter Verwendung eines Verbinders lösbar verbunden ist. Eine GPS-Antenne ist ebenfalls lösbar auf der Oberseite der Totalstation an dem Haltebügel angebracht. Die GPS-Antenne ist über ein Antennenkabel mit der GPS-Empfangseinheit verbunden.

Die US 5,760,748 (Beckingham et al.) zeigt einen C-förmigen Haltebügel, der zwischen dem Fuss einer Totalstation und einem Stativ befestigt wird, zum Montieren einer Satellitennavigationsantenne oberhalb der Totalstation in deren Stehachse.

Die Erweiterung einer Totalstation mit externen, im Feldeinsatz zur Anwendung kommenden Peripheriekomponenten ist vor allem in Hinblick auf die Handhabbarkeit der Totalstation problematisch, da nicht nur eine Datenanbindung der Peripheriekomponente an die Totalstation, sondern auch eine mechanische Anbindung erfolgen muss. Einerseits besteht die Möglichkeit, die Peripheriekomponente am Stativ oder Unterteil der Totalstation anzuschliessen. Da in diesem Fall die externe Peripheriekomponente nicht der Alhidade der Totalstation folgt und ein mit der an der Alhidade angeordneten Datenschnittstelle verbundenes Kabel geschleppt werden muss, hat sich diese Variante als nachteilig erwiesen. Aus diesem Grunde erfolgt die Anordnung zahlreicher externer Peripheriekomponenten im Stand der Technik direkt seitlich an der Alhidade. Hierdurch wird die Alhidade jedoch einseitig belastet, was vor allem bei Hochpräzisionsinstrumenten ein erhebliches Problem darstellt. Ausserdem verschlechtert sich hierdurch die Handhabbarkeit der Totalstation.

Die Schaffung einer modularen Erweiterbarkeit einer Totalstation erfordert zwangsläufig die Ausstattung der Totalstation mit Datenschnittstellen und mechanischen Schnittstellen. Das Vorhandensein dieser Schnittstellen darf jedoch die Handhabbarkeit einer Totalstation in der Grundkonfiguration nicht negativ beeinträchtigen. Die Schnittstellen sollen daher einerseits im unerweiterten Zustand möglichst verborgen und geschützt angeordnet sein, jedoch zur modularen Erweiterbarkeit der Totalstation an einem in ergonomischer Hinsicht leicht zugänglichen Ort untergebracht sein, der die ergonomisch sinnvolle Anordnung einer Peripheriekomponente erlaubt, ohne dass hierdurch die Funktionalität, Handhabbarkeit oder Messpräzision der Totalstation herabgesetzt wird. Auch im modular erweiterten Zustand soll die Totalstation einer in integrierter Bauweise aufgebauten Totalstation gleichen. Dieser scheinbare Zielkonflikt konnte bisher nicht zufriedenstellend gelöst werden.

Die Aufgabe der Erfindung besteht somit darin, eine modular erweiterbare Totalstation zur Verfügung zu stellen, die ausgehend von einer Totalstations-Grundausstattung, die den durchschnittlichen Kundenwünschen entspricht und keine die Handhabbarkeit der Totalstation im Feldeinsatz einschränkenden Datenschnittstellen und mechanische Schnittstellen aufweist, in Hinblick auf spezielle Kundenwünsche oder Anforderungen derart modular erweiterbar und/oder umrüstbar ist, dass die erweiterte Totalstation einer integrierten Bauweise gleicht.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die geodätische Totalstation zur optischen Messung von Horizontalwinkeln, Vertikalwinkeln und Distanzen zu einem beabstandeten Zielpunkt besitzt gattungsgemäss ein um eine vertikale Stehachse drehbares Oberteil, das auch als Alhidade bezeichnet wird. Das Oberteil umfasst eine Stütze mit mindestens einem Stützenabschnitt, im Speziellen zwei Stützenabschnitten, zwischen denen ein um eine horizontale Kippachse relativ zur Stütze drehbares Zielfernrohr, mittels welchem der Zielpunkt anzielbar und der Horizontalwinkel des Oberteils um die Stehachse, der Vertikalwinkel des Fernrohrs um die Kippachse und die Entfernung von dem Fernrohr zu dem Zielpunkt elektrosensorisch erfassbar ist, angeordnet ist. Das Fernrohr umfasst neben der Zieloptik einen elektrosensorischen Distanzmesser, insbesondere einen zur optischen Achse koaxialen Laserdistanzmesser auf. Die Stütze ist bevorzugt nach oben offen gabelförmig ausgebildet. Hierbei werden als Stützenabschnitte diejenigen insbesondere zwei Abschnitte der Stütze bezeichnet, die sich im Wesentlichen vertikal erstrecken und von denen das um die Kippachse drehbare Fernrohr gestützt wird. Die Gesamtheit der Stützenabschnitte und deren gegenseitige Befestigung bildet die Stütze, die somit den wesentlichen Bestandteil des Oberteils bildet. Es ist jedoch auch möglich, lediglich einen Stützenabschnitt zu verwenden, jedoch ist dem Fachmann bekannt, dass hierdurch die Messgenauigkeit erheblich sinkt. Weiters befindet sich am Oberteil eine elektronische Anzeige-Steuereinheit, welcher die elektrosensorisch erfassten Messdaten zugeführt sind, so dass die Position des Zielpunkts durch die Anzeige-Steuereinheit ermittelbar, optisch anzeigbar und insbesondere speicherbar ist. Unter der Anzeige-Steuereinheit wird im Allgemeinen eine Mikroprozessor-Recheneinheit mit elektronischen Datenspeichermitteln und einer Mensch-Maschine-Schnittstelle, insbesondere in Form eines Displays und einer Tastatur, verstanden. Die Anzeige-Steuereinheit kann mehrteilig ausgebildet sein.

Erfindungsgemäss befindet sich mindestens eine mit der Anzeige-Steuereinheit in Datenverbindung stehende, elektrische Kontaktelemente aufweisende Totalstations-Datenschnittstelle zur Ermöglichung einer Datenverbindung mit mindestens einer Peripheriekomponente an der nach oben weisenden Seite des mindestens einen Stützenabschnitts. Als nach oben weisend sei diejenige Seite des Stützenabschnitts zu verstehen, die bei normaler Ausrichtung der Totalstation mit vertikaler Stehachse in Zenitrichtung weist, also die Oberseite des Stützenabschnitts oder die Oberseite der Alhidade. Auf dieser nach oben weisenden Seite des mindestens einen Stützenabschnitts ist ausserdem eine mechanische Stützen-Schnittstelle vorgesehen. Bei zwei Stützenabschnitten befinden sich bevorzugt auf beiden nach oben weisenden Seiten der zwei Stützenabschnitte mechanische Stützen-Schnittstellen und auf mindestens einer nach oben weisenden Seite die Totalstations-Datenschnittstelle. Selbstverständlich muss es sich bei der nach oben weisenden Seite nicht um eine ebene Fläche oder Seite handeln. Unter der nach oben weisenden Seite ist generell der obere Abschnitt des Stützenabschnitts zu verstehen, der beispielsweise auch eine Kegelform haben kann. Die Totalstations-Datenschnittstelle und die mechanische Stützen-Schnittstellen können sich somit auch seitlich am oberen Abschnitt des Stützenabschnitts befinden.

Oberhalb der Stütze und des Fernrohrs ist ein Aufsatzteil mechanisch lösbar angekoppelt. Diese lösbare Verbindung erfolgt mittels der mindestens einen, auf der nach oben weisenden Seite des mindestens einen Stützenabschnitts angeordneten, mechanischen Stützen-Schnittstelle und mindestens einer entsprechenden mechanischen Aufsatzteil-Schnittstelle. Bevorzugt ist das Aufsatzteil als ein in seiner Grundform nach unten offenes, U-förmiges Teil mit zwei vertikalen Schenkeln ausgebildet, auf deren nach unten weisenden Seiten die jeweils eine mechanische Aufsatzteil-Schnittstelle ausgeformt ist, wobei die Ausgestaltung und Position der Aufsatzteil-Schnittstellen derart sind, dass die mechanischen Stützen-Schnittstellen und die mechanischen Aufsatzteil-Schnittstelle eine gegenseitige, insbesondere kraft- oder formschlüssige lösbare Verbindung ermöglichen. In diesem Fall verbindet das Aufsatzteil die oberen Enden der zwei Stützenabschnitte. Bevorzugt besitzt mindestens eine der mechanischen Schnittstellen einen Verriegelungsmechanismus, mittels welchem die entsprechenden mechanischen Schnittstellen fest miteinander verriegelt mechanisch verbunden und wieder gelöst werden können.

Das Aufsatzteil umfasst mindestens eine Peripheriekomponente und mindestens eine, elektrische Kontaktelemente aufweisende Aufsatzteil-Datenschnittstelle, die mit der Peripheriekomponente in Datenverbindung steht. Erfindungsgemäss sind die mindestens eine mechanische Stützen-Schnittstelle, die mindestens eine mechanische Aufsatzteil-Schnittstelle, die mindestens eine Totalstations-Datenschnittstelle und die mindestens eine Aufsatzteil-Datenschnittstelle derart angeordnet und ausgebildet, dass die Kontaktelemente der Totalstations-Datenschnittstelle und die Kontaktelemente der Aufsatzteil-Datenschnittstelle durch Ankoppeln des Aufsatzteils an den Stützenabschnitt in gegenseitigen elektrischen Kontakt treten. Das elektrische In-Kontakt-Treten erfolgt bevorzugt zwangsgeführt über die mechanischen Schnittstellen. Jedoch ist es alternativ ebenfalls möglich, das gegenseitige Koppeln der mechanischen Schnittstellen und das gegenseitige Koppeln der elektrischen Datenschnittstellen kinematisch zu trennen, indem beispielsweise sowohl ein Verriegelungsmechanismus für die mechanischen Schnittstellen, als auch für die Datenschnittstellen zum Einsatz kommt.

In einer alternativen Ausführungsform sind die mechanischen Schnittstellen und die Datenschnittstellen als gemeinsame Schnittstelle ausgebildet, indem mechanische Verbindungselemente gleichzeitig als elektrische Kontaktelemente dienen.

Die Peripheriekomponente, die mit der Anzeige-Steuereinheit zumindest über die Aufsatzteil-Datenschnittstelle und die Totalstations-Datenschnittstelle in Datenverbindung steht, wird z.B. von einer Funkempfangseinheit zum Empfang von Funksignalen, einer Satellitenpositionsbestimmungseinheit, insbesondere einer GPS-Empfangseinheit, zum Empfang von Satellitensignalen, oder einer Funksendeeinheit zum Senden von Funksignalen gebildet. Unter der Peripheriekomponente ist jedoch allgemein jedes Element, das über die Datenschnittstellen mit der Anzeige-Steuereinheit direkt oder indirekt in Datenverbindung stehen kann, zu verstehen. Dies kann insbesondere ein geodätischer Kreisel, ein elektronischer Kompass, eine Messsensor für atmosphärische Messgrössen, insbesondere Temperatur, Luftdruck und Luftfeuchtigkeit, ein aktiver Reflektor, ein Rotationslaser, eine weitere Mikroprozessoreinheit, eine Anzeigeeinheit oder ein Speichermedium sein. Weiters ist es möglich, dass das Aufsatzteil mehrere Peripheriekomponenten, die mit der Anzeige-Steuereinheit und/oder untereinander in Datenverbindung stehen, aufweist.

Die Aufsatzkomponente kann einteilig oder mehrteilig ausgebildet sein. In einer möglichen Ausführungsform setzt sich die Aufsatzkomponente aus einem Adapterbügel, der oberhalb der Stütze angeordnet wird und die Aufsatzteil-Datenschnittstelle umfasst, und mindestens einer getrennten, lösbar mit dem Adapterbügel verbundenen Peripheriekomponente zusammen. Eine mechanische Adapterbügel-Schnittstelle, eine mechanische Peripheriekomponenten-Schnittstelle, eine Adapterbügel-Datenschnittstelle und die Peripheriekomponenten-Datenschnittstelle sind derart angeordnet und ausgebildet, dass elektrische Kontaktelemente der Adapterbügel-Datenschnittstelle und elektrische Kontaktelemente der Peripheriekomponenten-Datenschnittstelle durch Ankoppeln der Peripheriekomponente an den Adapterbügel - insbesondere zwangsgeführt - in gegenseitigen elektrischen Kontakt treten, so dass eine Datenverbindung zwischen der Peripheriekomponente über die Peripheriekomponenten-Datenschnittstelle, die Adapterbügel-Datenschnittstelle, die Aufsatzteil-Datenschnittstelle und die Totalstations-Datenschnittstelle mit der Anzeige-Steuereinheit ermöglich wird.

Das Aufsatzteil kann in der Standardausstattung der Totalstation als ein einfacher Haltebügel, wie aus dem Stand der Technik bekannt, mit lediglich zwei mechanischen Schnittstellen, die den mechanischen Aufsatzteil-Schnittstellen entsprechen, aufweisen, ausgebildet sein. Anstelle einer Aufsatzteil-Datenschnittstelle ist ein Freiraum im Haltebügel ausgebildet. Da der Haltebügel die Totalstations-Datenschnittstelle abdeckt, ist diese stets vor mechanischen Einflüssen und Feuchtigkeit geschützt und wird unauffällig verdeckt. Das Eindringen von Feuchtigkeit kann zusätzlich durch eine im Haltebügel oder an der nach oben weisenden Seite des Stützenabschnitts integrierten Dichtlippe vermieden werden. Ein wesentlicher Vorteil der Erfindung besteht darin, dass die oberen mechanischen Stützen-Schnittstelle bei einer grundausgestatteten Totalstation zur Ankopplung eines einfachen Haltebügels verwendet werden können und somit von nämlichem verdeckt werden, wobei gleichzeitig auch die Totalstations-Datenschnittstelle verdeckt wird, und bei Erweiterung der Totalstation durch Entfernen eines einfachen, kostengünstigen Teils, dem Haltebügel, Zubehörkomponenten in Form eines Aufsatzteils mit mindestens einer entweder integrierten oder ebenfalls angekoppelten Peripheriekomponente anschliessbar sind. Da ein in der Grundausstattung der Totalstation zugeordnetes Standardteil gegen das Aufsatzteil, das aufgrund der dort integrierten Peripheriekomponente über eine Zusatzfunktionalität verfügt, ausgetauscht werden kann, bleibt die integrierte Bauweise der Totalstation erhalten, da aussen an das Gehäuse der Totalstation angekoppelte Module entfallen können. Denn das Aufsatzteil wird aufgrund des Austauschs mit dem Haltebügel optischer, funktionaler und ergonomischer Bestandteil der Totalstation. Im Standardbetrieb sichtbare mechanische Schnittstellen können entfallen. Ein weiterer Vorteil der Erfindung besteht darin, dass durch die Anordnung des Aufsatzteils innerhalb der Stehachse, in einer Ausführungsform mit dem Schwerpunkt in der Stehachse, eine asymmetrische Belastung des Oberteils der Totalstation vermieden wird und Peripheriekomponenten an einem von der Seite und von oben zugänglichen Ort positioniert werden können. Dies erweist sich vor allem dann als besonders vorteilhaft, wenn die Zusatzkomponente als Funkeinheit, insbesondere als GPS-Empfangseinheit, ausgebildet ist.

Die erfindungsgemässen Vorrichtungen werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1a: eine geodätische Totalstation mit einem Aufsatzteil, das eine als Funkempfangseinheit und Funksendeeinheit ausgebildete Peripheriekomponenten aufweist, im entkoppelten Zustand in einer Schrägansicht;
- Fig. 1b: die geodätische Totalstation von Fig. 1a mit dem Aufsatzteil im angekoppelten Zustand in einer Schrägansicht;
- Fig. 1c: die geodätische Totalstation von Fig. 1a und 1b mit dem Aufsatzteil im entkoppelten Zustand in einer Detailseitenansicht;
- Fig. 2a: eine geodätische Totalstation mit einem Aufsatzteil, das einen Adapterbügel und zwei von diesem entkoppelte, als Funkempfangseinheit und Satellitenpositionsbestimmungseinheit ausgebildete Peripheriekomponenten aufweist, in einer Schrägansicht;
- Fig. 2b: die geodätische Totalstation von Fig. 2a mit dem Aufsatzteil und den zwei Peripheriekomponenten im angekoppelten Zustand in einer Schrägansicht; und
- Fig. 2c: die geodätische Totalstation von Fig. 2a und 2b mit dem Aufsatzteil und den zwei Peripheriekomponenten im entkoppelten Zustand in einer Detailseitenansicht.

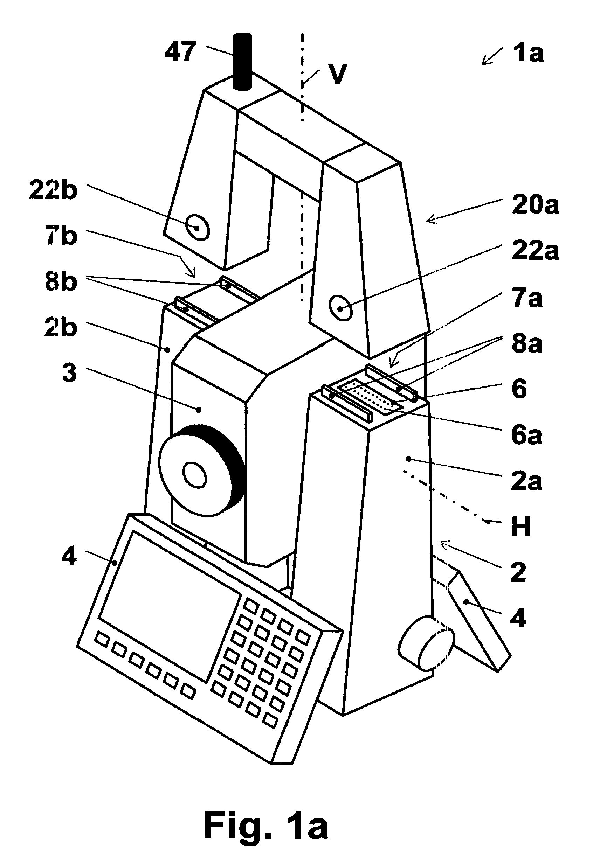

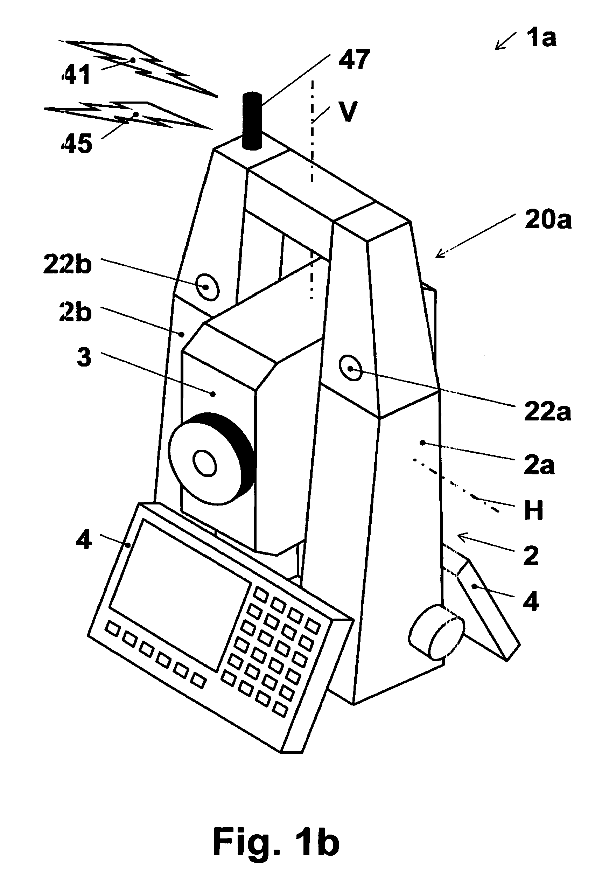

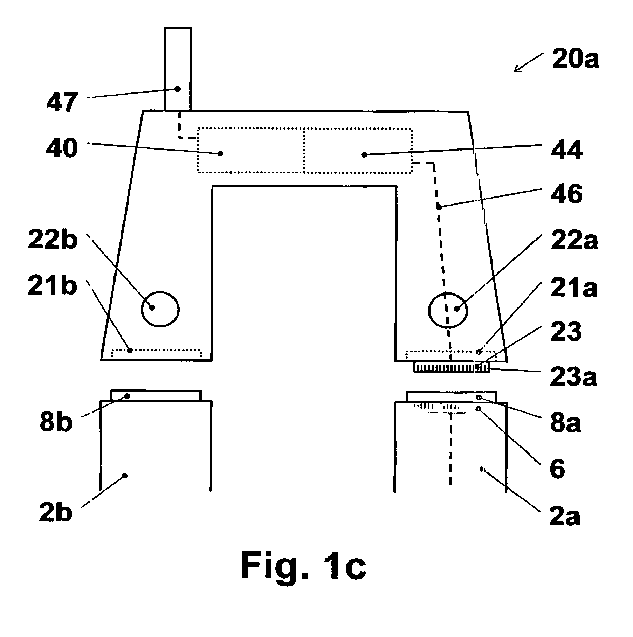

Die Figuren 1a, 1b und 1c zeigen in einer rein schematischen, nicht massstäblichen Darstellung eine erste mögliche Ausführungsform der erfindungsgemässen Totalstation in unterschiedlichen Kopplungszuständen, Ansichten und Detaillierungsgraden. Die drei Figuren werden im Folgenden gemeinsam erläutert. Eine geodätische Totalstation zur optischen Messung von Horizontalwinkeln, Vertikalwinkeln und Distanzen zu einem beabstandeten Zielpunkt hat ein um eine vertikale Stehachse V drehbares Oberteil 1a. Das Oberteil 1a setzt sich aus einer Stütze 2 mit einem rechten Stützenabschnitt 2a und einem linken Stützenabschnitt 2b, einem zwischen diesen um die horizontale Kippachse H drehbar gelagerten Zielfernrohr 3, einer beidseitig am Oberteil 1a angeordneten elektronischen Anzeige-Steuereinheit 4 und einem Aufsatzteil 20a zusammen. Mittels des Zielfernrohrs 3 kann der Zielpunkt angezielt und die Entfernung von der Totalstation zu dem Zielpunkt elektrosensorisch erfasst werden. Weiters sind Mittel (nicht dargestellt) zum elektrosensorischen Erfassen der Winkelausrichtung des Oberteils 1a und des Zielfernrohrs 3 vorgesehen. Diese elektrosensorisch erfassten Messdaten werden der Anzeige-Steuereinheit 4 zugeführt und von dieser verarbeitet, so dass die Position des Zielpunkts relativ zur Totalstation durch die Anzeige-Steuereinheit 4 ermittelbar, optisch anzeigbar und insbesondere speicherbar ist. Auf den beiden nach oben weisenden Seiten 7a und 7b des rechten Stützenabschnitts 2a und des linken Stützenabschnitts 2b ist jeweils eine mechanische Stützen-Schnittstelle 8a und 8b angeordnet, die von jeweils zwei parallelen Hakenleisten gebildet werden. Zwischen den beiden Hakenleisten der rechten Stützen-Schnittstelle 8a befindet sich an der nach oben weisenden Seite 7a eine mit der Anzeige-Steuereinheit 4 in Datenverbindung stehende Totalstations-Datenschnittstelle 6 mit elektrischen Kontaktelemente 6a zur Ermöglichung einer Datenverbindung mit mindestens einer Peripheriekomponente.

Das Aufsatzteil 20a hat eine nach unten offene U-Form und besitzt eine der rechten mechanischen Stützen-Schnittstelle 8a entsprechende rechte mechanische Aufsatzteil-Schnittstelle 21a und eine der linken mechanischen Stützen-Schnittstelle 8b entsprechende linke mechanische Aufsatzteil-Schnittstelle 21b. Mittels dieser letztgenannten mechanischen Schnittstellen kann das Aufsatzteils 20a mechanisch oberhalb der Stütze 2 und des Zielfernrohrs 3 lösbar angekoppelt werden, so dass das Aufsatzteil 20a die beiden Stützenabschnitte 2a, 2b oben mechanisch verbindet. Die Fig. 1a und 1c zeigt den entkoppelten Zustand, während die Fig. 1b den angekoppelten Zustand zeigt. Zur Entkopplung sind für beide Aufsatzteil-Schnittstellen 21a, 21b Entriegelungsmechanismen 22a, 22b vorgesehen, durch welche die formschlüssige Verbindung wieder lösbar ist und somit das Aufsatzteil 20a von der Stütze 2 gelöst werden kann.

Das Aufsatzteil 20a umfasst weiters eine Peripheriekomponente, die als eine Funkempfangseinheit 40 und eine Funksendeeinheit 44 ausgebildet ist, und eine Aufsatzteil-Datenschnittstelle 23 mit elektrischen Kontaktelementen 23a, die mit der Funkempfangseinheit 40 und der Funksendeeinheit 44 über eine elektrische Verbindung 46 in Datenverbindung steht. Eine Antenne 47 dient zum Empfangen und Senden von Funksignalen 41 bzw. 45. Die beiden mechanischen Stützen-Schnittstellen 8a, 8b, die beiden mechanischen Aufsatzteil-Schnittstelle 21a, 21b, die Totalstations-Datenschnittstelle 6 und die Aufsatzteil-Datenschnittstelle 23 sind jeweils derart angeordnet und ausgebildet sind, dass die Kontaktelemente 6a der Totalstations-Datenschnittstelle 6 und die Kontaktelemente 23a der Aufsatzteil-Datenschnittstelle 23 durch Ankoppeln des Aufsatzteils 20a an die beiden Stützenabschnitte 2a, 2b in gegenseitigen elektrischen Kontakt treten, wie in Fig. 1c veranschaulicht und in Fig. 1b geschehen. Somit stehen im angekoppelten Zustand, siehe Fig. 1b, die Funkempfangseinheit 40 und die Funksendeeinheit 44 über die Aufsatzteil-Datenschnittstelle 23 und die Totalstations-Datenschnittstelle 6 mit der Anzeige-Steuereinheit 4 in Datenverbindung, so dass es beispielsweise möglich ist, Fernsteuersignale von einer Fernbedienung (nicht dargestellt) an die Totalstation zu senden und von der Totalstation erfasste Messdaten an die Fernbedienung zu senden. Die Stromversorgung der Funkempfangseinheit 40 und der Funksendeeinheit 44 erfolgt über die Totalstations-Datenschnittstelle 6, oder in einer alternativen Ausführungsform über eine im Aufsatzteil 20a integrierte Batterie. Die Antenne 47 der Funkempfangseinheit 40 und der Funksendeeinheit 44 befindet sich oberhalb der restlichen Totalstation, so dass optimale Sende- und Empfangseigenschaften gewährleistet sind.

Das Aufsatzteil 20a kann leicht gegen ein anderes Aufsatzteil mit Funkmodulen, die einem anderen Funkstandard entsprechen, ersetzt werden. Die Anpassung der Totalstation an nationale Vorschriften ist somit problemlos möglich.

Ausserdem kann das Aufsatzteil 20a gegen einen einfachen, optisch dem Aufsatzteil 20a entsprechenden, jedoch weder über eine Aufsatzteil-Datenschnittstelle 23 noch eine Peripheriekomponente verfügenden Haltebügel (nicht dargestellt) ersetzt werden, der im nicht modular erweiterten Zustand der Totalstation die Totalstations-Datenschnittstelle 6 verdeckt und vor Beschädigungen und Verschmutzungen schützt. Die mechanischen Stützen-Schnittstellen 8a, 8b dienen in diesem Fall indirekt dem Transport der Totalstation über den Haltebügel.

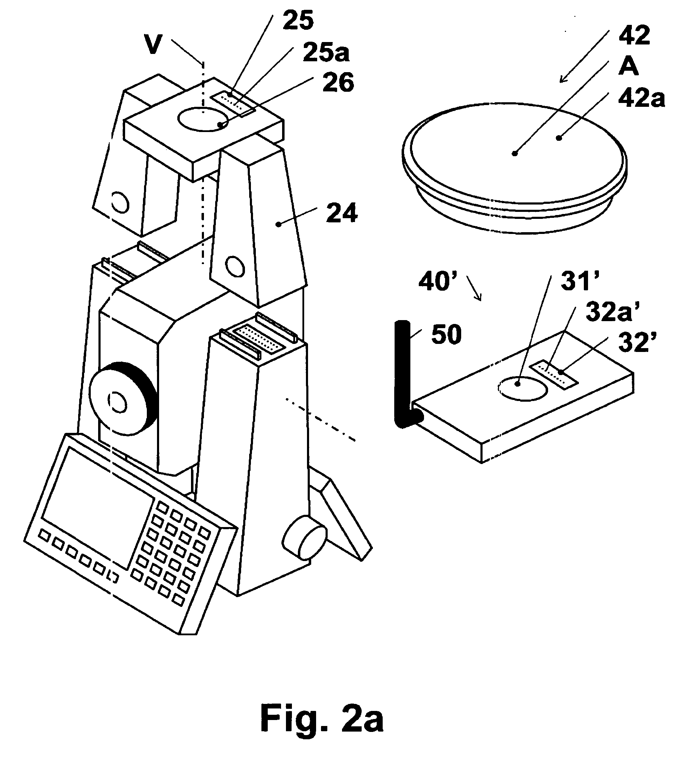

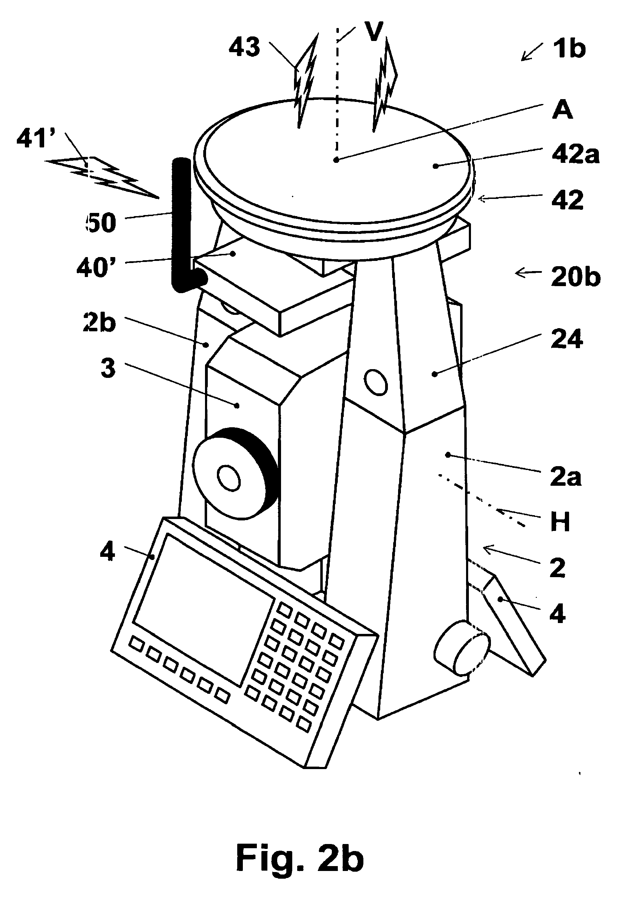

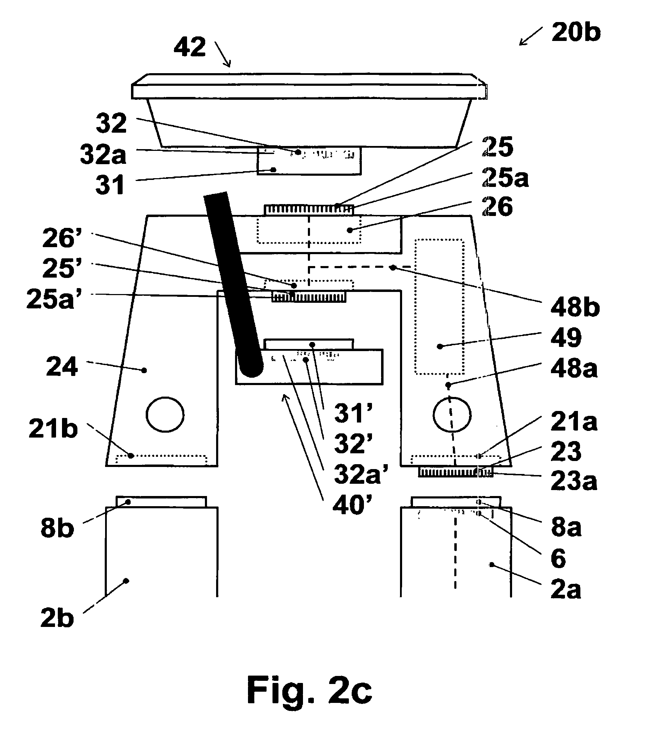

In den Figuren 2a, 2b und 2c ist in einer rein schematischen, nicht massstäblichen Darstellung eine zweite mögliche Ausführungsform der erfindungsgemässen Totalstation in unterschiedlichen Kopplungszuständen, Ansichten und Detaillierungsgraden dargestellt. Da sich die Unterschiede zur ersten Ausführungsform von Fig. 1a, 1b und 1c auf das Aufsatzteil 20b des Oberteils 1b beschränken, wird im Folgenden nur das Aufsatzteil 20b erläutert. Selbiges ist in dieser Ausführungsform, im Gegensatz zur einteiligen Ausbildung im ersten Ausführungsbeispiel, mehrteilig ausgebildet und umfasst einen Adapterbügel 24 und zwei Peripheriekomponenten, die an den Adapterbügel 24 mechanisch wieder lösbar angekoppelt werden können. Der Adapterbügel 24 besitzt zwei mechanische Aufsatzteil-Schnittstellen 21a, 21b und eine Aufsatzteil-Datenschnittstelle 23. Der Adapterbügel 24 entspricht somit bezüglich seiner Schnittstellen zur Stütze 2 dem Aufsatzteil 20a aus dem ersten Ausführungsbeispiel. Weiters umfasst der Adapterbügel 24 eine erste Adapterbügel-Datenschnittstelle 25, eine zweite Adapterbügel-Datenschnittstelle 25', die beide mit der Aufsatzteil-Datenschnittstelle 23 über elektrische Verbindungen 48a, 48b und ein Schnittstellenverwaltungsmodul 49 in Datenverbindung stehen und jeweils elektrische Kontaktelemente 25a bzw. 25a' aufweisen, und eine erste und zweite mechanische Adapterbügel-Schnittstelle 26, 26'. Die erste Adapterbügel-Datenschnittstelle 25 und die erste mechanische Adapterbügel-Schnittstelle 26 befinden sich auf der Oberseite der Adapterbügels 24, wobei die erste mechanische Adapterbügel-Schnittstelle 26 zentrisch und symmetrisch zur Stehachse V angeordnet und von dieser zentrisch durchlaufen wird. Die zweite Adapterbügel-Datenschnittstelle 25' und die zweite mechanische Adapterbügel-Schnittstelle 26' befinden sich hingegen auf der Unterseite des Adapterbügels 24.

Die beiden Peripheriekomponenten sind als eine Satellitenpositionsbestimmungseinheit 42 zur Anordnung auf der Oberseite des Aufsatzteils 24 und als eine Funkempfangseinheit 40' zur Anordnung auf der Unterseite des Aufsatzteils 24 ausgebildet. Auf der Unterseite der Satellitenpositionsbestimmungseinheit 42 mit ihrer Satellitensignalempfangsantenne 42a mit dem Antennezentrum A sind eine erste mechanische Peripheriekomponenten-Schnittstelle 31 mittig zum Antennezentrum A und eine erste Peripheriekomponenten-Datenschnittstelle 32 mit elektrischen Kontaktelemente 32a ausgeformt, während sich auf der Oberseite der Funkempfangseinheit 40' mit seiner Antenne 50 eine zweite mechanische Peripheriekomponenten-Schnittstelle 31' und eine zweite Peripheriekomponenten-Datenschnittstelle 32' mit elektrischen Kontaktelemente 32a' befinden. Über die mechanischen Peripheriekomponenten-Schnittstellen 31, 31' können die Peripheriekomponenten 42, 40' mechanisch lösbar an den Adapterbügel 24 angekoppelt werden. Die mechanischen Adapterbügel-Schnittstellen 26, 26', die mechanische Peripheriekomponenten-Schnittstellen 31, 31', die Adapterbügel-Datenschnittstellen 25, 25' und die Peripheriekomponenten-Datenschnittstellen 32, 32' sind jeweils derart angeordnet und ausgebildet, dass die elektrischen Kontaktelemente 25a bzw. 25a' der Adapterbügel-Datenschnittstelle 25 bzw. 25' und die elektrischen Kontaktelemente 32a bzw. 32a' der Peripheriekomponenten-Datenschnittstelle 32 bzw. 32' durch Ankoppeln der Satellitenpositionsbestimmungseinheit 42 bzw. der Funkempfangseinheit 40' an den Adapterbügel 24 insbesondere zwangsgeführt in gegenseitigen elektrischen Kontakt treten. Durch die Anordnung der Schnittstellen ist die Satellitensignalempfangsantenne 42a der Satellitenpositionsbestimmungseinheit 42 derart auf dem Aufsatzteil 20 anordnet ist, dass das Antennezentrum A der Satellitensignalempfangsantenne 42a auf der Stehachse V zwangszentriert liegt. Die Satellitenpositionsbestimmungseinheit 42 und die Funkempfangseinheit 40' stehen jeweils über die erste bzw. zweite Peripheriekomponenten-Datenschnittstelle 32 bzw. 32', die erste bzw. zweite Adapterbügel-Datenschnittstelle 25 bzw. 25', die elektrischen Verbindungen 48a, 48b, das Schnittstellenverwaltungsmodul 49, die Aufsatzteil-Datenschnittstelle 23 und die Totalstations-Datenschnittstelle 6 mit der Anzeige-Steuereinheit 4 in Datenverbindung.

Von der Satellitenpositionsbestimmungseinheit 42 werden Satellitensignale 43, insbesondere GPS-Signale, empfangen und direkt oder indirekt an die Anzeige-Steuereinheit 4 weitergeleitet. Somit kann die absolute Position der Totalstation mit einer Genauigkeit von etwa 5 bis 10 Metern bestimmt werden. Zur Verbesserung der Positionsbestimmungsgenauigkeit empfängt die Funkempfangseinheit 40' Funksignale 41', die von einer Referenzstation (nicht dargestellt) ausgesendet werden und beispielsweise dem RTK- oder DGPS-Standard entsprechen, und leitet diese ebenfalls direkt oder indirekt an die Anzeige-Steuereinheit 4 weiter. Die erzielbare Bestimmungsgenauigkeit der absoluten Position der Totalstation beträgt hierdurch unter 5 Millimeter. In Kombination mit einer Relativwinkel- und Distanzmessung durch die Totalstation ist es somit möglich, die absolute Position eines Zielpunkts mit hoher Genauigkeit zu bestimmen.

Durch den Einsatz des beschriebenen Adapterbügels 24 erhöht sich die modulare Erweiterbarkeit nochmals. Auch bei dieser zweiten Ausführungsform können alternative Peripheriekomponenten eingesetzt werden. So ist es möglich, unterschiedliche Funkempfangseinheiten für unterschiedliche Referenzstationssignale und unterschiedliche Satellitenpositionsbestimmungseinheiten 42 für diverse Standards, beispielsweise GPS, GLONASS und GALILEO, bereitzustellen.

Selbstverständlich sind weitere alternative Ausgestaltungen und Ausführungsformen der Erfindung, insbesondere der Anordnung und Ausführung der mechanischen und elektrischen Schnittstellen, möglich.

## Patentansprüche

1. Geodätische Totalstation zur optischen Messung von Horizontalwinkeln, Vertikalwinkeln und Distanzen zu einem beabstandeten Zielpunkt, mit einem um eine vertikale Stehachse (V) drehbaren Oberteil (1a, 1b), das
• eine Stütze (2) mit mindestens einem Stützenabschnitt (2a; 2b),
• ein an dem mindestens einen Stützenabschnitt (2a; 2b) angeordnetes, um eine horizontale Kippachse (H) relativ zur Stütze (2) drehbares Zielfernrohr (3), mittels welchem der Zielpunkt anzielbar und die Ertfernung zu dem Zielpunkt elektrosensorisch erfassbar ist,
• eine elektronische Anzeige-Steuereinheit (4), welcher elektrosensorisch erfasste Messdaten zugeführt sind, so dass die Position des Zielpunkts durch die Anzeige-Steuereinheit (4) ermittelbar, optisch anzeigbar und insbesondere speicherbar ist,
• mindestens eine mit der Anzeige-Steuereinheit (4) in Datenverbindung stehende Totalstations-Datenschnittstelle (6) zur Ermöglichung einer Datenverbindung mit mindestens einer Peripheriekomponente und
• ein Aufsatzteil (20a, 20b), das die mindestens eine Peripheriekomponente umfasst und das oberhalb der Stütze (2) und des Fernrohrs (3) mittels mindestens einer, auf der nach oben weisenden Seite (7a; 7b) des mindestens einen Stützenabschnitts (2a; 2b) angeordneten, mechanischen Stützen-Schnittstelle (8a; 8b) und mindestens einer entsprechenden mechanischen Aufsatzteil-Schnittstelle (21a; 21b) des Aufsatzteils (20a, 20b) mechanisch lösbar angekoppelt ist,
aufweist,
**dadurch gekennzeichnet, dass**
• die Totalstations-Datenschnittstelle (6) elektrische Kontaktelemente (6a) aufweist und an der nach oben weisenden Seite (7a; 7b) des mindestens einen Stützenabschnitts (2a; 2b) angeordnet ist,
• das Aufsatzteil (20a, 20b) mindestens eine, elektrische Kontaktelemente (23a) aufweisende Aufsatzteil-Datenschnittstelle (23), die mit der Peripheriekomponente in Datenverbindung steht, besitzt, und
• die mechanische Stützen-Schnittstelle (8a; 8b), die mechanische Aufsatzteil-Schnittstelle (21a; 21b), die Totalstations-Datenschnittstelle (6) und die Aufsatzteil-Datenschnittstelle (23) derart angeordnet und ausgebildet sind, dass die Kontaktelemente (6a) der Totalstations-Datenschnittstelle (6) und die Kontaktelemente (23a) der Aufsatzteil-Datenschnittstelle (23) durch Ankoppeln des Aufsatzteils (20a, 20b) an den Stützenabschnitt (2a; 2b) - insbesondere zwangsgeführt - in gegenseitigen elektrischen Kontakt treten.

2. Geodätische Totalstation nach Anspruch 1, **dadurch gekennzeichnet, dass**
• die Stütze (2) nach oben offen gabelförmig ausgebildet ist und zwei Stützenabschnitte (2a, 2b), zwischen denen das Zielfernrohr (3) angeordnet ist, mit jeweils einer mechanischen Stützen-Schnittstelle (8a, 8b) aufweist, und
• das Aufsatzteil (20a, 20b) oberhalb des Oberteils (1) mittels zweier entsprechenden mechanischen Aufsatzteil-Schnittstellen (21a, 21b) des Aufsatzteils (20a, 20b) mechanisch lösbar angekoppelt ist und die zwei Stützenabschnitte (2a, 2b) miteinander verbindet.

3. Geodätische Totalstation nach Anspruch 1 oder 2, **dadurch gekennzeichnet, dass**
das Aufsatzteil (20b) mehrteilig ausgebildet ist und
• einen Adapterbügel (24) mit
□ der mindestens einen mechanischen Aufsatzteil-Schnittstelle (21a; 21b),
□ der mindestens einen Aufsatzteil-Datenschnittstelle (23),
□ mindestens einer Adapterbügel-Datenschnittstelle (25, 25'), die mit der mindestens einen Aufsatzteil-Datenschnittstelle (23) in Datenverbindung steht, und
mindestens einer mechanischen Adapterbügel-Schnittstelle (26, 26'), und
• die mindestens eine Peripheriekomponente mit
einer mechanischen Peripheriekomponenten-Schnittstelle (31, 31'), mittels welcher die Peripheriekomponente mechanisch entkoppelbar an dem Adapterbügel (24) angekoppelt ist, und
□ einer Peripheriekomponenten-Datenschnittstelle (32, 32')
umfasst, wobei die mechanische Adapterbügel-Schnittstelle (26, 26'), die mechanische Peripheriekomponenten-Schnittstelle (31, 31'), die Adapterbügel-Datenschnittstelle (25, 25') und die Peripheriekomponenten-Datenschnittstelle (32, 32') derart angeordnet und ausgebildet sind, dass elektrische Kontaktelemente (25a, 25a') der Adapterbügel-Datenschnittstelle (25, 25') und elektrische Kontaktelemente (32a, 32a') der Peripheriekomponenten-Datenschnittstelle (32, 32') durch Ankoppeln der Peripheriekomponente an den Adapterbügel (24) - insbesondere zwangsgeführt - in gegenseitigen elektrischen Kontakt treten.

4. Geodätische Totalstation nach Anspruch 3, **dadurch gekennzeichnet, dass**
• das Aufsatzteil (20b) zwei Peripheriekomponenten umfasst und
• der Adapterbügel (24) zwei Adapterbügel-Datenschnittstellen (25, 25') und zwei mechanische Adapterbügel-Schnittstellen (26, 26') aufweist, wobei eine der zwei mechanischen Adapterbügel-Schnittstellen (26, 26') auf der Oberseite des Adapterbügels (24) zentrisch - insbesondere symmetrisch - zur Stehachse (V) angeordnet ist.

5. Geodätische Totalstation nach einem der Ansprüche 1 bis 4, **dadurch gekennzeichnet, dass**
• die Peripheriekomponente als eine Funkempfangseinheit (40, 40') zum Empfang von Funksignalen (41, 41') ausgebildet ist und
• die Funkempfangseinheit (40, 40') zumindest über die Aufsatzteil-Datenschnittstelle (23) und die Totalstations-Datenschnittstelle (6) mit der Anzeige-Steuereinheit (4) in Datenverbindung steht.

6. Geodätische Totalstation nach Anspruch 5, **dadurch gekennzeichnet, dass**
• die Funkempfangseinheit als eine Satellitenpositionsbestimmungseinheit (42), insbesondere eine GPS-Empfangseinheit, zum Empfang von Satellitensignalen (43) ausgebildet ist, mittels welcher die absolute Position der Totalstation bestimmbar ist, und
• der Anzeige-Steuereinheit (4) Satellitenpositionsdaten zumindest über die Aufsatzteil-Datenschnittstelle (23) und die Totalstations-Datenschnittstelle (6) zugeführt sind.

7. Geodätische Totalstation nach Anspruch 6, **dadurch gekennzeichnet, dass**
eine Satellitensignalempfangsantenne (42a) der Satellitenpositionsbestimmungseinheit (42) derart auf dem Aufsatzteil (20b) anordnet ist, dass das Antennenzentrum (A) der Satellitensignalempfangsantenne (42a) auf der Stehachse (V) liegt.

8. Geodätische Totalstation nach einem der Ansprüche 1 bis 7, **dadurch gekennzeichnet, dass**
• die Peripheriekomponente als eine Funksendeeinheit (44) zum Senden von Funksignalen (45) ausgebildet ist und
• die Funksendeeinheit (44) zumindest über die Aufsatzteil-Datenschnittstelle (23) und die Totalstations-Datenschnittstelle (6) mit der Anzeige-Steuereinheit (4) in Datenverbindung steht.

## Claims

1. Geodetic total station for optical measurement of horizontal angles, vertical angles and distances to a target point at a distance, having an upper part (1a, 1b) which is rotatable about a vertical standing axis (V) and has
• a support (2) with at least one support section (2a; 2b),
• a sighting telescope (3) which is arranged on the at least one support section (2a; 2b) and is rotatable about a horizontal tilting axis (H) relative to the support (2) and by means of which the target point can be targeted and the distance to the target point can be measured by electrosensory means,
• an electronic display and control unit (4) which is fed measured data acquired by electrosensory means so that the position of the target point can be determined, optically displayed and, in particular, stored by the display and control unit (4),
• at least one total station data interface (6) having a data link to the display and control unit (4) and intended to enable a data link to at least one peripheral component, and
• a top-mounted part (20a, 20b), which comprises the at least one peripheral component and is detachably coupled mechanically above the support (2) and the telescope (3) by means of at least one mechanical support interface (8a; 8b) arranged on the upwards-pointing side (7a; 7b) of the at least one support section (2a; 2b), and at least one corresponding mechanical top-mounted part interface (21a; 21b) of the top-mounted part (20a, 20b),
**characterized in that**
• the total station data interface (6) has electrical contact elements (6a) and is arranged on the upwards-pointing side (7a; 7b) of the at least one support section (2a; 2b),
• the top-mounted part (20a, 20b) has at least one top-mounted part data interface (23) with electrical contact elements (23a) which has a data link to the peripheral component, and
• the mechanical support interface (8a; 8b), the mechanical top-mounted part interface (21a; 21b), the total station data interface (6) and the top-mounted part data interface (23) are arranged and designed in such a way that the contact elements (6a) of the total station data interface (6), and the contact elements (23a) of the top-mounted part data interface (23) make mutual electrical contact by the coupling of the top-mounted part (20a, 20b) to the support section (2a; 2b) - in particular with positive action.

2. Geodetic total station according to Claim 1, **characterized in that**
• the support (2) is designed in the shape of an upwardly open fork and has two support sections (2a, 2b), between which the sighting telescope (3) is arranged, respectively having a mechanical support interface (8a, 8b), and
• the top-mounted part (20a, 20b) is detachably coupled mechanically above the upper part (1) by means of two corresponding mechanical top-mounted part interfaces (21a, 21b) of the top-mounted part (20a, 20b) and connects the two support sections (2a, 2b) to one another.

3. Geodetic total station according to Claim 1 or 2, **characterized in that**
the top-mounted part (20b) is of multipartite design and comprises
• an adapter bow (24) including
□ the at least one mechanical top-mounted part interface (21a; 21b),
□ the at least one top-mounted part data interface (23),
□ at least one adapter bow data interface (25, 25') which has a data link to the at least one top-mounted part data interface (23), and
□ at least one mechanical adapter bow interface (26, 26'), and
• the at least one peripheral component, including
□ a mechanical peripheral component interface (31, 31') by means of which the peripheral component is coupled to the adapter bow (24) in a fashion capable of mechanical decoupling, and
□ a peripheral component data interface (32, 32'),
the mechanical adapter bow interface (26, 26'), the mechanical peripheral component interface (31, 31'), the adapter bow data interface (25, 25') and the peripheral component data interface (32, 32') being arranged and designed in such a way that electrical contact elements (25a, 25a') of the adapter bow data interface (25, 25') and electrical contact elements (32a, 32a') of the peripheral component data interface (32, 32') make mutual electrical contact by the coupling of the peripheral component to the adapter bow (24) - in particular with positive action.

4. Geodetic total station according to Claim 3, **characterized in that**
• the top-mounted part (20b) comprises two peripheral components, and
• the adapter bow (24) has two adapter bow data interfaces (25, 25') and two mechanical adapter bow interfaces (26, 26'), one of the two mechanical adapter bow interfaces (26, 26') being arranged on the top side of the adapter bow (24) centrally - in particular symmetrically - relative to the standing axis (V).

5. Geodetic total station according to one of Claims 1 to 4, **characterized in that**
• the peripheral component is designed as a radio receiving unit (40, 40') for receiving radio signals (41, 41'), and
• the radio receiving unit (40, 40') has a data link to the display and control unit (4) at least via the top-mounted part data interface (23) and the total station data interface (6).

6. Geodetic total station according to Claim 5, **characterized in that**
• the radio receiving unit is designed as a satellite position determination unit (42), in particular a GPS receiving unit, for receiving satellite signals (43), by means of which the absolute position of the total station can be determined, and
• the display and control unit (4) is fed satellite position data at least via the top-mounted part data interface (23) and the total station data interface (6).

7. Geodetic total station according to Claim 6, **characterized in that**
a satellite signal receiving antenna (42a) of the satellite position determination unit (42) is arranged on the top-mounted part (20b) in such a way that the antenna centre (A) of the satellite signal receiving antenna (42a) lies on the standing axis (V).

8. Geodetic total station according to one of Claims 1 to 7, **characterized in that**
• the peripheral component is designed as a radio transmitting unit (44) for transmitting radio signals (45), and
• the radio transmitting unit (44) has a data link to the display and control unit (4) at least via the top-mounted part data interface (23) and the total station data interface (6).

## Revendications

1. Station totale géodésique, pour la mesure optique d'angles horizontaux, d'angles verticaux et de distances par rapport à un point-cible distant, avec une partie supérieure (1a, 1b) susceptible de tourner autour d'un axe vertical (V) vertical, qui présente
• un support (2) avec au moins un tronçon de support (2a ; 2b),
• une lunette de visée (3), disposée à le au moins un tronçon de support (2a ; 2b), susceptible de tourner autour d'un axe de basculement (H) horizontal, par rapport au support (2), au moyen de laquelle le point-cible peut être visé et la distance au point-cible est susceptible d'être appréhendée par un capteur électrique,
• une unité de commande d'affichage (4) électronique, à laquelle sont amenées des données de mesure appréhendées par capteur électrique, de manière que la position du point-cible puisse être déterminée par l'unité de commande d'affichage (4), puisse être affichée optiquement et, en particulier, puise être stockée en mémoire,
• au moins une interface de données de station totale (6), placée en liaison de données avec l'unité de commande d'affichage (4), pour permettre une liaison de données avec au moins un composant périphérique, et
• une partie d'applique (20a, 20b), comprenant le au moins un composant périphérique et couplée, de manière désolidarisable mécaniquement, au dessus du support (2) et de la lunette de visée (3), à l'aide d'au moins une interface de support (8a ; 8b) mécanique, disposée sur la face (7a ; 7b), tournée vers le haut, du au moins un tronçon de support (2a ; 2b) et d'au moins une interface de partie d'applique (21a ; 21b), mécanique correspondante, de la partie d'applique (20a, 20b),
**caractérisée en ce que**
• l'interface de données de station totale (6) présente des éléments de contact (6a) électriques et est disposée sur la face (7a ; 7b), tournée vers le haut, du au moins un tronçon de support (2a ; 2b),
• la partie d'applique (20a, 20b) comprend au moins une interface de données de partie d'applique (23), présentant des éléments de contact électrique (23a), placée en liaison de données avec le composant périphérique, et
• l'interface de support (8a ; 8b) mécanique, l'interface de partie d'applique (21a, 21b) mécanique, l'interface de données de station totale (6) et l'interface de données de partie d'applique (23) sont disposées et réalisées de manière que les éléments de contact (6a) électriques de l'interface de données de station totale (6) entrent en contact électrique mutuel - en particulier avec guidage forcé -, par couplage de la partie d'applique (20a, 20b) au tronçon de support (2a ; 2b).

2. Station totale géodésique selon la revendication 1, **caractérisée en ce que**
• le support (2) est réalisé en forme de fourche ouverte vers le haut et présente deux tronçons de support (2a ; 2b), entre lesquels la lunette de visée (3) est disposée, avec chaque fois une interface de support (8a ; 8b) mécanique, et
• la partie d'applique (20a, 20b) est couplée, de manière désolidarisable mécaniquement, au dessus de la partie supérieure (1), au moyen de deux interfaces de partie d'applique (21a ; 21 b) mécaniques correspondantes de la partie d'applique (20a, 20b), et relie ensemble les deux tronçons de support (2a ; 2b).

3. Station totale géodésique selon la revendication 1 ou 2, **caractérisée en ce que** la partie d'applique (20b) est réalisée en plusieurs parties et comprend :
• un étrier adaptateur (24), avec
o la au moins une interface de partie d'applique (21a ; 21 b) mécanique,
o la au moins une interface de données de partie d'applique (23),
o au moins une interface de données d'étrier adaptateur (25, 25'), placée en liaison de données avec la au moins une interface de données de partie d'applique (23), et
o au moins une interface d'étrier adaptateur (26, 26') mécanique, et
• le au moins un composant périphérique, avec
o une interface de composant périphérique (31, 31') mécanique, au moyen de laquelle le composant mécanique est couplé, en pouvant être désaccouplé mécaniquement, à l'étrier adaptateur (24), et
o une interface de données de composant périphérique (32, 32'),
l'interface d'étrier adaptateur (26, 26') mécanique, l'interface de composant périphérique (31, 31') mécanique, l'interface de données d'étrier adaptateur (25, 25') et l'interface de données de composant périphérique (32, 32') étant disposées et réalisées de manière que des éléments de contact électrique (25a, 25a') de l'interface de données d'étrier adaptateur (25, 25') et des éléments de contact électrique (32a, 32a') de l'interface de données de composant périphérique (32, 32') entrent en contact électrique mutuel - en particulier avec guidage forcé - par couplage du composant périphérique à l'étrier adaptateur (24).

4. Station totale géodésique selon la revendication 3, **caractérisée en ce que**
• la partie d'applique (20b) comprend deux composants périphériques, et
• l'étrier adaptateur (24) présente deux interfaces de données d'étrier adaptateur (25, 25') et deux interfaces d'étrier adaptateur (26, 26') mécaniques, l'une des deux interfaces d'étrier adaptateur (26, 26') mécaniques étant disposée de manière centrée - en particulier symétriquement - par rapport à l'axe vertical (V) sur la face supérieure de l'étrier adaptateur (24).

5. Station totale géodésique selon l'une des revendications 1 à 4, **caractérisée en ce que**
• le composant périphérique est réalisé sous la forme d'une unité de réception radio (40, 40') pour la réception de signaux radio (41, 41'), et
• l'unité de réception radio (40, 40') est en liaison de données avec l'unité de commande d'affichage (4) par l'intermédiaire de l'interface de données de partie d'applique (23) et de l'interface de données de station totale (6).

6. Station totale géodésique selon la revendication 5, **caractérisée en ce que**
• l'unité de réception radio est réalisée sous la forme d'une unité de détermination de position satellite (42), en particulier une unité de réception GPS, pour la réception de signaux satellite (43), au moyen desquels la position absolue de la station totale est susceptible d'être déterminée, et
• des données de position satellite sont amenées à l'unité de commande d'affichage (4), au moins par l'intermédiaire de l'interface de données de partie d'applique (23) et de l'interface de données de station totale (6).

7. Station totale géodésique selon la revendication 6, **caractérisée en ce qu'**
une antenne de réception de signaux satellite (42a) de l'unité de détermination de position satellite (42) est disposée sur la partie d'applique (20b) de manière que le centre d'antenne (A) de l'antenne de réception de signaux satellite (42a) soit située sur l'axe vertical (V).

8. Station totale géodésique selon l'une des revendications 1 à 7, **caractérisée en ce que**
• le composant périphérique est réalisé sous forme d'une unité d'émission radio (44), pour envoyer des signaux radio (44), et
• l'unité d'émission radio (44) est en liaison de données avec l'unité de commande d'affichage (4) au moins par l'intermédiaire de l'interface de données de partie d'applique (23) et de l'interface de données de station totale (6).
